# EUROPÄISCHE PATENTANMELDUNG

(11) **EP 2 532 482 A2**
(43) Veröffentlichungstag der Anmeldung: **12.12.2012**
(21) Anmeldenummer: 12169309.7
(22) Anmeldetag: 24.05.2012
(51) Int. Cl.: B25B 27/30, B60G 15/06

(54) **Spannteller für einen Federspanner sowie Federspanner**

(30) Priorität: 06.06.2011 DE 202011050354 U
(71) Anmelder: Hazet-Werk Hermann Zerver GmbH & Co. KG, 42857 Remscheid (DE)
(72) Erfinder: Piel, Thomas, 51145 Köln (DE); Welp, Peter, 42929 Wermelskirchen (DE)
(74) Vertreter: Ksoll, Peter

(57) **Zusammenfassung**

Die vorliegende Erfindung betrifft einen Spannteller (3) für einen Federspanner sowie einen Federspanner, aufweisend den erfindungsgemäßen Spannteller (3). Der Spannteller (3) ist dadurch gekennzeichnet, dass zur formschlüssigen Aufnahme eines Federsegmentes (10) insbesondere einer Schraubendruckfeder auf dem Spannteller (3) Distanzstücke (4) variabel einstellbar sind. Hierdurch ist es möglich, zum einen Federsegmente (10) mit voneinander verschiedenenen Durchmessern aufzunehmen, zum anderen den jeweiligen Mittelpunkt (14) des Federsegmentes (10) exzentrisch zu dem Mittelpunkt (15) des Spanntellers (3) zu versetzen.

## Beschreibung

Die vorliegende Erfindung betrifft einen Spannteller für einen Spannteller gemäß den Merkmalen im Oberbegriff von Anspruch 1.

Die vorliegende Erfindung betrifft weiterhin einen Federspanner zur Montage und/oder Demontage einer Schraubendruckfeder gemäß den Merkmalen im Anspruch 20.

Bei Kraftfahrzeugen werden zur Steigerung des Fahrkomforts gefederte Fahrwerke bzw. Achsen eingesetzt. Um eine notwendige Federkraft zum Ein-und Ausfedern des Rades bereitzustellen, weisen die Fahrwerksteile als integralen Bestandteil eine Federkomponente auf. Diese Federkomponente ist häufig eine Schraubendruckfeder, da sie einen optimalen Kompromiss aus möglicher Abstimmung des gewünschten Fahrkomforts sowie günstiger Produzierbarkeit und hoher Langlebigkeit bildet.

Damit beim Überfahren von Schlaglöchern oder sonstigen Bodensenken das Rad ausfedern kann und nicht nur beim Überfahren von Bodenwellen einfedern kann, ist die Schraubendruckfeder im eingebauten Zustand des Kraftfahrzeuges vorgespannt. Die Vorspannung erfolgt zum einen durch die Gewichtskraft des Fahrzeuges, welche die Schraubendruckfeder in einer Ruheposition mehrere Zentimeter einfedern lässt.

Wird das Fahrzeug angehoben, beispielsweise auf eine Arbeitsbühne, federn die Räder aus und werden an einem Endanschlag begrenzt, sodass ein weiteres Ausfedern verhindert wird. Damit die Feder in dem ausgefederten Zustand nicht aus dem Fahrwerk bzw. ihrer Einbauposition herausfällt, befindet sie sich immer noch in einem vorgespannten Zustand. Ist es nun notwendig, Reparatur, Montage oder sonstige Wartungs- und Instandsetzungsarbeiten an einem Fahrwerk durchzuführen bzw. einen Federwechsel durchzuführen, so muss die Vorspannkraft der Schraubendruckfeder überwunden werden, sodass die Feder entnehmbar ist.

Aus dem Stand der Technik sind hierzu Federspanner bekannt, insbesondere Innenfederspanner, die in der Feder positioniert werden und dann durch einen Spannantrieb gegen die Vorspannkraft der Feder gespannt werden und somit die komprimierte Schraubendruckfeder aus dem Fahrzeug mit samt des Federspanners entnehmbar ist.

Beispielsweise ist aus der DE 201 19 267 U1 ein Innenfederspanner bekannt, bei dem ein zentraler Spindelantrieb mit zwei an den Enden des Spindelantriebs angeordneten Spanntellern ausgerüstet ist, welcher innerhalb einer Schraubendruckfeder positionierbar ist.

Verschiedene Fahrzeugtypen, vom Kleinwagen über den Mittelklassebereich bis hin zu kleinen Nutzfahrzeugen haben jedoch unterschiedlich dimensionierte Schraubendruckfedern, um die jeweiligen Anforderungen an den Fahrkomfort bzw. die Zuladung, zu erfüllen.

Um ein möglichst breites Spektrum verschiedener Fahrzeugtypen im Werkstattbereich bedienen zu können, bedarf es somit eines großen Sortimentes an Spezialwerkzeugen, sodass eine Vielzahl von Fahrzeugtypen, auch herstellerübergreifend, bedient werden kann.

Aufgabe der vorliegenden Erfindung ist es daher, aus dem Stand der Technik bekannte Innenfederspanner und Außenfederspanner derart zu verbessern, dass sie universeller anwendbar sind und einfacher handhabbar sind.

Die zuvor genannte Aufgabe wird mit einem Spannteller für einen Federspanner zur Montage und/oder Demontage einer Fahrwerksfeder eines Kraftfahrzeugs gemäß den Merkmalen im Anspruch 1 gelöst.

Die zuvor genannte Aufgabe wird weiterhin durch einen Federspanner zur Montage und/oder Demontage einer Schraubendruckfeder gemäß den Merkmalen im Anspruch 20 gelöst.

Vorteilhafte Ausführungsvarianten der vorliegenden Erfindung sind Bestandteil der abhängigen Ansprüche.

Der erfindungsgemäße Spannteller für einen Federspanner zur Montage und/oder Demontage einer Fahrwerksfeder eines Kraftfahrzeugs, wobei der Spannteller eine Kontaktfläche zur Aufnahme eines Federsegmentes aufweist, über das eine Stauchkraft in axialer Richtung auf die Fahrwerksfeder aufbringbar ist, ist dadurch gekennzeichnet, dass ein Aufnahmedurchmesser zur formschlüssigen Aufnahme des Federsegmentes auf dem Spannteller variabel über Distanzstücke einstellbar ist.

Im Rahmen der Erfindung wird über auf dem Spannteller frei positionier- oder aber verlagerbare Distanzstücke eine radiale formschlüssige Fixierung der Windung eines Federsegmentes sichergestellt. Der erfindungsgemäße Spannteller ist somit nicht nur für einen Federtyp, sondern universell für viele Federtypen, mit variierenden Innen- und Außendurchmessern und/oder Graddurchmessern einsetzbar. Im Rahmen der Erfindung können die Distanzstücke dabei derart positioniert und/oder eingestellt werden, dass sie entweder, bevorzugt im Falle eines Außenfederspanners den Außendurchmesser des Federsegmentes erfassen oder aber bevorzugt im Falle eines Innenfederspanners den Innendurchmesser eines Federsegmentes erfassen oder aber auch beliebig kombiniert werden.

Bevorzugt sind die Distanzstücke relativ auf dem Spannteller verschiebbar, besonders bevorzugt ergibt sich die Verschiebbarkeit durch eine Drehbewegung und/oder eine Längsbewegung. Beispielsweise können die Distanzstücke auf dem Spannteller in Form von Exzenterschrauben ausgebildet sein, die sich exzentrisch um einen Fixierpunkt drehen und somit einen variablen Aufnahmedurchmesser zur Verfügung stellen. Bei dem Aufnahmedurchmesser kann es sich beispielsweise um einen Innenaufnahmedurchmesser und/oder einen Außenaufnahmedurchmesser handeln. Ebenfalls können die Distanzstücke über Längsbohrungen oder Längsschlitze, welche sich in dem Spannteller befinden und in Spanntellerebene bevorzugt radial nach außen zeigend oder aber spiralförmig erstreckend, angeordnet sein. Die Distanzstücken wären dann innerhalb der Längsbohrungen verschiebbar. Eine Fixierung kann beispielsweise durch Reib-und/oder Formschluss, beispielsweise durch eine Sägezahnverzahnung und eine Konterschraube erfolgen.

Bevorzugt ist der erfindungsgemäße Spannteller in einem Innenfederspanner und/oder einem Außenfederspanner einsetzbar, Insbesondere ergibt sich der Vorteil durch die variable Einstellungsmöglichkeit der Aufnahme des Spanntellers, das fahrzeugmodellübergreifend und auch fahrzeugherstellerübergreifend bei Umständen der insetzung nur eines Spanntellers erforderlich ist, um bereits alle anfallenden Montage- und Instandsetzungsarbeiten in einer Werkstatt abdecken zu können. Es ist somit möglich, bereits vorhandene Federspanner mit dem erfindungsgemäßen Spannteller zu ergänzen. Darüber hinaus bietet der erfindungsgemäße Spannteller eine Zukunftssicherheit, da auch die in Zukunft zum Einsatz kommenden Fahrwerksfedern durch die variable Einstellung über die Distanzstücke abgedeckt werden können. Eine Neuanschaffung von kostenintensiven Federspannern für neue Fahrzeugmodelle wird somit weitestgehend vermieden.

In einer weiteren bevorzugten Ausführungsvariante ist durch die Distanzstücke zwischen dem Aufnahmedurchmesser und dem Federsegment eine Spielpassung oder eine Übergangspassung herstellbar. Hierbei ist die Spielpassung und/oder Übergangspassung sowohl zwischen den Distanzstücken zwischen dem Innenaufnahmedurchmesser als auch zwischen den Distanzstücken und dem Außenaufnahmedurchmesser herstellbar. Durch die Spielpassung und/oder Übergangspassung ist es im Rahmen der Erfindung möglich, durch einfaches händisches Einsetzen, den Spannteller entsprechend in oder um die Windung des Federsegmentes arbeitssicher zu platzieren, um anschließend direkt mit der Federkontraktion unter Einsatz des Federspanners zu beginnen.

In einer weiteren bevorzugten Ausführungsvariante der vorliegenden Erfindung sind Distanzstücke in verschiedenen Aufnahmeöffnungen auf dem Spannteller angeordnet, wobei die Aufnahmeöffnungen derart positioniert sind, dass sich verschiedene Aufnahmedurchmesser ergeben. Im Rahmen der Erfindung bedeutet dies, dass auf dem Spannteller verteilt Aufnahmeöffnungen vorpositioniert sind, in die die Distanzstücke einsteckbar sind. Durch das bewusste Einstecken von Distanzstücken in gezielt Aufnahmeöffnungen sind daher verschiedene Aufnahmedurchmesser herstellbar oder aber im Rahmen der Erfindung ist es auch möglich, durch bewusstes Einstecken in bestimmte Aufnahmeöffnungen eine Exzentrizität zwischen Mittelpunkt des Aufnahmefedersegmentes und einer Mittelängsachse des Spanntellers herzustellen.

Im Falle von steckbaren Distanzstücken sind diese besonders bevorzugt derart ausgebildet, dass sie einen Aufnahmekopf und einen Distanzfuß aufweisen, wobei der Aufnahmekopf in einer Aufnahmeöffnung des Spanntellers anordbar ist. Besonders bevorzugt sind die Distanzstücke in einer Draufsicht schlüssellochförmig ausgebildet. Der Aufnahmekopf bildet dabei den oberen Teil des Schlüsselloches und weist eine kreisabschnittsförmige Kontur auf. Der Distanzfuß erstreckt sich von diesem aus und ist bevorzugt in radialer Richtung orientiert, sodass er an einer Innenaufnahme an einem Innenaufnahmedurchmesser nach außen zeigend und an einem Außenaufnahmedurchmesser nach innen zeigend orientiert auf dem Spannteller anordnenbar ist.

Besonders bevorzugt kommt diese Ausführungsvariante zum Einsatz, da der Aufnahmekopf formschlüssig in einer Aufnahmeöffnung des Spanntellers anordnenbar ist, und durch standardisierte Aufnahmeöffnungen und Aufnahmeköpfe die schlüssellochartig ausgebildeten Distanzstücke universell in jede Aufnahmeöffnung positionierbar sind.

In einer weiteren besonders bevorzugten Ausführungsvariante können in den erfindungsgemäßen Spannteller Distanzstücke mit voneinander unterschiedlich langen Distanzfüßen eingesteckt werden. Auch hierdurch ist eine Veränderung des jeweiligen Aufnahmedurchmessers im Rahmen der Erfindung möglich,

Am Ende der Distanzfüße weisen diese besonders bevorzugt eine Stirnseite zur Lagefixierung des Innendurchmessers des Federendes auf und/oder des Außendurchmessers des Federendes auf, wobei die Stirnseite zumindest abschnittsweise an dem Innendurchmesser und/oder dem Außendurchmesser des Federendes zur Anlage kommend ausgebildet ist. Vorzugsweise ist die Stirnseite dabei mit einer Krümmung ausgebildet, die der Krümmung des jeweils korrespondierenden Abschnittes des Federsegmentes entspricht. Hierdurch wird wiederum eine besonders gute formschlüssige Anlage sichergestellt, die zum einen eine Beschädigung des aufgenommenen Federsegmentes durch Lackabplatzer des Korrosionsschutzes oder aber durch Einkerbungen vermeidet. Zum anderen kann jedoch auch ein Ausgleich des erhöhten Spiels bei differenter Steigung der Feder zum Spannteller erfolgen. Durch eine geneigte Lage des Spanntellers in der Feder kommt es bei Komprimierung der Feder zu einem Spiel, welches sich durch entsprechende Wahl eines Distanzstückes kompensieren lässt, sodass eine spielarme Führung gewährleistet wird. Ebenfalls hierdurch wird die Arbeitssicherheit mit dem erfindungsgemäßen Spannteller gesteigert.

In einer weiteren besonders bevorzugten Ausführungsvariante der vorliegenden Erfindung sind die Distanzstücke aus einem Kunststoff hergestellt. Hierdurch wird sichergestellt, dass der aufgenommene Innendurchmesser oder Außendurchmesser an dem Distanzstück entlang gleitet und das Distanzstück eine entsprechende Nachgiebigkeit aufweist, die eine Beschädigung des angelegten Durchmessers vermeidet.

In einer weiteren bevorzugten Ausführungsvariante sind die Distanzstücke, insbesondere die Stirnseiten der Distanzstücke beschichtet. Vorzugsweise handelt es sich dabei um eine Kunststoffbeschichtung oder aber eine Gummibeschichtung. Hierdurch wird sichergestellt, dass die in dem Abschnitt aufgenommene Feder durch die Distanzstücke nicht beschädigt wird. Einkerbungen oder aber Lackabplatzer, welche die Langlebigkeit der entsprechenden Fahrwerksfeder beeinträchtigen können, werden hierdurch vermieden.

Im Rahmen der Erfindung sind die Distanzstücke dabei komplett aus Kunststoff gefertigt, oder aber aus Metall oder einem Leichtmetall, Durch die erfindungsgemäße Beschichtung ergeben sich die oben genannten Vorteile.

Weiterhin besonders bevorzugt sind die Distanzstücke unterschiedlich gekennzeichnet, sodass ein anwendender Monteur eine Verwechslung ausschließen kann und in schneller Art und Weise die von ihm gewünschten Arbeitspositionen herstellen kann. Die arbeitsvorbereitenden Maßnahmen werden hierdurch zeitlich auf ein Minimum reduziert, insbesondere müssen mit den erfindungsgemäßen Spanntellern keine arbeitsaufwendigen und vollständigen Spanntellerwechsel vorgenommen werden, sondern durch schnelles und einfaches Einstellen oder aber Austauschen der Distanzstücke ist der Federspanner einsatzbereit. Die Kennzeichnung kann dabei bevorzugt in einer partiellen oder aber vollständigen Einfärbung der Distanzstücke erfolgen oder aber auch durch die Anbringung, beispielsweise in Form von Eingravierung, Einlasern oder Ähnlichem von Zeichen, beispielsweise von Arbeitspositionen oder aber Zahlenangaben zur Verdeutlichung der eingestellten Abstände.

In einer weiteren bevorzugten Ausführungsvariante der vorliegenden Erfindung sind die Distanzstücke als stirnverzahnte Exzentermutter ausgebildet, wobei die stirnverzahnte Exzentermutter exzentrisch von einem Fixierpunkt auf dem Spannteller drehbar ist. Im Rahmen der Erfindung kann die stirnverzahnte Exzentermutter dann über eine kraftschlüssige und/oder formschlüssige Fixierung derart lagepositioniert werden, dass eine Fixierung des Aufnahmefedersegmentes in radialer Richtung erfolgt.

In einer weiteren bevorzugten Ausführungsvariante sind die Distanzstücke als Steckbolzen ausgebildet, wobei auf dem Spannteller Abstandsbohrungen nebeneinander radial nach außen verlaufend angeordnet sind und die Steckbolzen in die Abstandsbohrungen variabel zur Festlegung eines Aufnahmedurchmessers anordnenbar sind. Hierbei sind die Aufnahmebohrungen zur Aufnahme der Steckbolzen maßgeblich in axialer Richtung, also rechtwinklig zur Spanntellerebene, orientiert angeordnet, sodass die Steckbolzen ebenfalls im Wesentlichen rechtwinklig zur Aufnahmefläche des Spanntellers orientiert angeordnet sind. Hierdurch erfolgt über die Steckbolzen eine radiale Lagefixierung der Schraubendruckfeder.

Weiterer Bestandteil der Erfindung ist ein Federspanner, zur Montage und/oder Demontage einer Schraubendruckfeder in einem Kraftfahrzeug, der erfindungsgemäß dadurch gekennzeichnet ist, dass er einen Spannteller aufweist, wobei der Spannteller wiederum mindestens eines der zuvor genannten Merkmale aufweist.

Weitere Vorteile, Merkmale, Eigenschaften und Aspekte der vorliegenden Erfindung sind Bestandteil der folgenden Beschreibung. Die schematischen Figurendarstellungen zeigen bevorzugte Ausführungsbeispiele und dienen zum einfachen Verständnis der Erfindung. Es zeigen:
- Figur 1: einen erfindungsgemäßen Federspanner in perspektivischer Ansicht;
- Figur 2: einen erfindungsgemäßen Spannteller in einer Draufsicht mit Distanzstücken;
- Figur 3: den Spannteller aus Figur 2 mit anderen Distanzstücken und hierdurch erzeugten exzentrischen Versatz;
- Figur 4: einen Spannteller mit unterschiedlichen Distanzstücken und einem hierdurch erzeugten exzentrischen Versatz;
- Figur 5: eine Schnittansicht durch ein Distanzstück in einem Spannteller;
- Figur 6a und b: einen erfindungsgemäßen Innenfederspanner in einer Schraubendruckfeder angesetzt;
- Figur 7: einen erfindungsgemäßen Spannteller mit verschiedenen Aufnahmeöffnungen zur Positionierung der Distanzstücke zur Herstellung eines Außenaufnahmedurchmessers;
- Figur 8: den Spannteller aus Figur 7 zur Herstellung eines Innenaufnahmedurchmessers;
- Figur 9: einen erfindungsgemäßen Spannteller mit variabel einstellbarem Innenaufnahmedurchmesser durch stirnverzahnte Exzentermuttern;
- Figur 10: einen erfindungsgemäßen Spannteller mit Steckbolzen;
- Figur 11: einen erfindungsgemäßen Spannteller mit verzahnten Distanzstücken;
- Figur 12: einen erfindungsgemäßen Spannteller für einen Außenfederspanner;
- Figur 13: einen erfindungsgemäßen Spannteller für einen Außenfederspanner in einer weiteren Ausführungsvariante und
- Figur 14: einen erfindungsgemäßen Spannteller mit stufenlos einstellbaren Distanzstücken.

In den Figuren werden für gleiche oder ähnliche Bauteile dieselben Bezugszeichen verwendet, auch wenn eine wiederholte Beschreibung aus Vereinfachungsgründen entfällt.

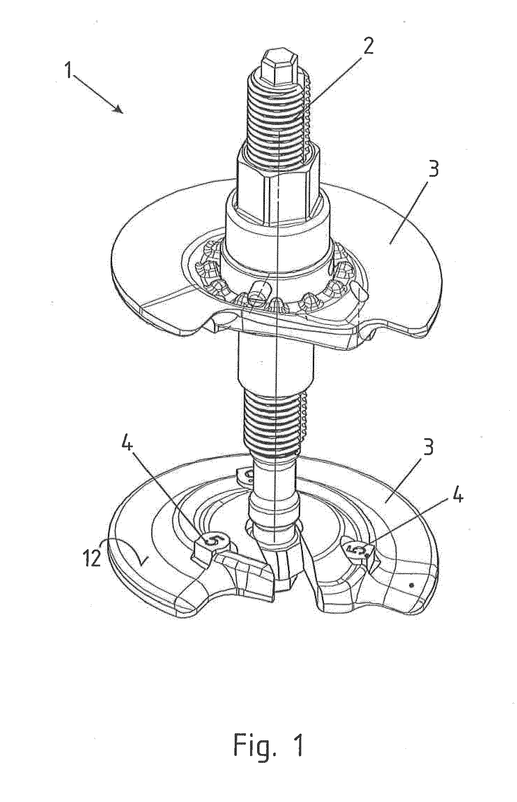

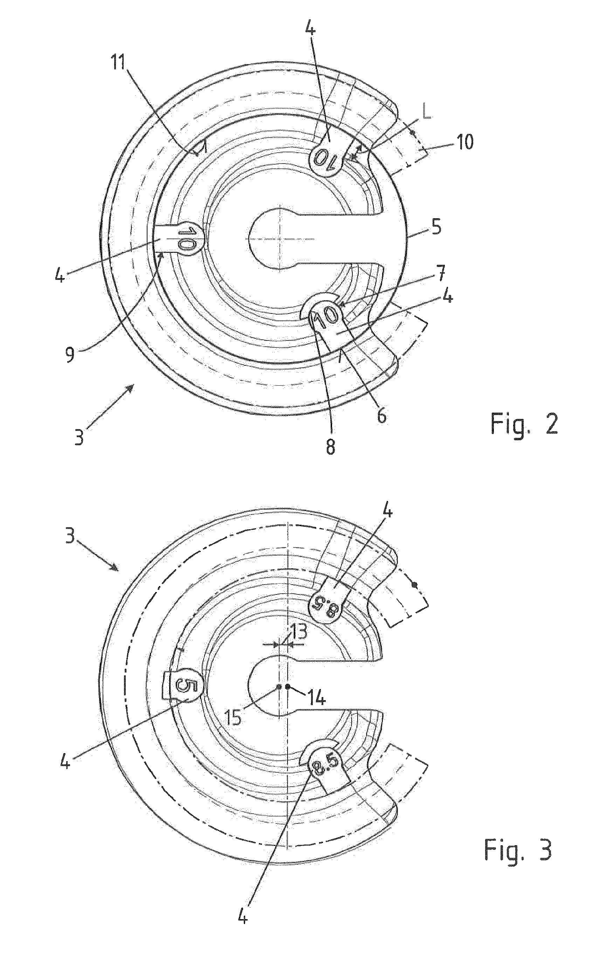

Figur 1 zeigt einen erfindungsgemäßen Innenfederspanner 1 aufweisend ein zentrales Spannmittel 2 sowie zwei an dem Spannmittel 2 festgelegte Spannteller 3 zur Aufnahme einer hier nicht näher dargestellten Fahrwerksfeder. In dem auf die Bildebene bezogenen unteren Spannteller 3 sind Distanzstücke 4 eingesetzt, die einen in Figur 2 gezeigten Aufnahmedurchmesser 5 festlegen.

Figur 2 zeigt den aus Figur 1 bekannten unteren Spannteller 3 des Innenfederspanners 1. Zu erkennen ist, dass der Aufnahmedurchmesser 5 durch Stirnseiten 6 der hier drei angeordneten Distanzstücke 4 aufgespannt wird. Die Distanzstücke 4 selber sind mit einem Aufnahmekopf 7 jeweils in eine Aufnahmeöffnung 8 in der Spannplatte 3 angeordnet. Der Aufnahmekopf 7 und die Aufnahmeöffnung 8 selber sind im Rahmen der Erfindung standardisiert, sodass unterschiedliche Distanzstücke 4 jeweils universal mit ihrem Aufnahmekopf 7 in eine Aufnahmeöffnung 8 einsetzbar sind.

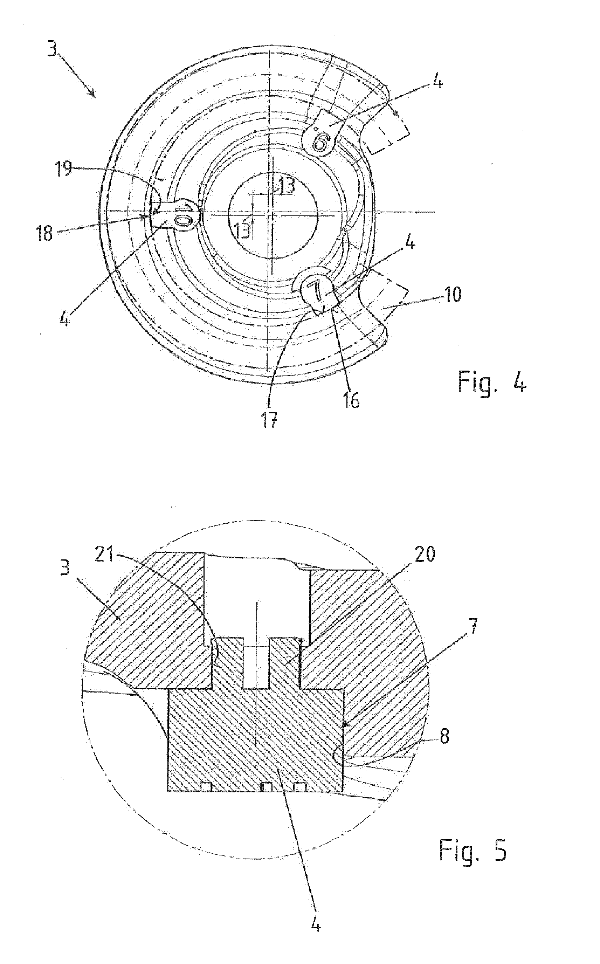

Der Distanzfuß 9 des Distanzstückes 4 weist dann eine jeweils spezifische Länge L auf, welche wiederum, wie bereits oben erwähnt, im Zusammenspiel mit den anderen Distanzstücken 4 den Aufnahmedurchmesser 5 festlegt, Hier dargestellt sind Distanzfüße 9 mit einer Länge L, die eine Aufweitung des Außendurchmessers von 20 mm entspricht. Folglich sind die Distanzstücke 4 mit der Kennzeichnungszahl "10" versehen, sodass einem anwendenden Monteur ersichtlich wird, dass er durch Wahl der Distanzstücke 4 mit der Kennzeichnung "10" eine Aufnahmedurchmesservergrößerung von 20mm vornimmt, also eine Radiusvergrößerung von jeweils 10 mm. Im Rahmen der Erfindung bietet diese Kennzeichnung insbesondere die Möglichkeit, die in Figur 3 und 4 beschriebenen exzentrischen Versätze durch korrekte Wahl der Distanzstücke 4 nachvollziehbar einzustellen. Beispielsweise ist es möglich, durch die Wahl der in Figur 3 dargestellten Distanzstücke 4 mit den Kennzeichnungszahlen "10", "7" und "9" den genauen jeweiligen exzentrischen Versatz bezogen auf die Bildebene in Horizontal- und Vertikalrichtung vorherzubestimmen.

Weiterhin dargestellt in Figur 2 ist ein Federsegment 10 einer Schraubendruckfeder, wobei in dem Federsegment 10 ein Innendurchmesser 11 vorhanden ist. Der Innendurchmesser 11 wird durch den Aufnahmedurchmesser 5 vorzugsweise formschlüssig nahezu spielfrei aufgenommen. Zur axialen Aufbringung einer Kraft liegt das Federsegment 10 auf einer in Figur 1 dargestellten Aufnahmefläche 12 auf dem Spannteller 3 auf.

In Figur 3 dargestellt ist ein Spannteller 3, wobei hier voneinander verschiedene Distanzstücke 4 eingesetzt sind. Die Distanzstücke 4 unterscheiden sich durch verschiedene Längen des Fußbereiches, wodurch ein exzentrischer Versatz 13 des Mittelpunktes 14 des Innendurchmessers 11 des Federsegmentes 10 und einer Mittellängsachse 15 des Spanntellers 3 erfolgt. Auf die Bildebene bezogen wird der Versatz hierbei horizontal nach rechts erzeugt.

Figur 4 zeigt eine weitere Möglichkeit eines exzentrischen Versatzes 13 durch Wahl dreier voneinander verschiedener Distanzstücke 4. Hierbei erfolgt der exzentrische Versatz 13 sowohl auf die Bildebene bezogen nach links und nach oben. Weiterhin erkennbar in Figur 2, 3 und 4 ist, dass die Distanzstücke 4 jeweils mit einer Stirnseite 16 an einer Innenfläche 17 des Federsegmentes 10 zumindest abschnittsweise zur Anlage kommen. Die Stirnseite 16 weist dabei bevorzugt eine Krümmung 18 auf, die der Innenkrümmung 19 des Federsegmentes 10 in diesem Abschnitt entspricht.

Figur 5 zeigt eine Detailschnittansicht eines Distanzstückes 4, welches in einer Aufnahmeöffnung 8 des Spanntellers 3 eingesetzt ist. Das Distanzstück 4 selber ist mit seinem Aufnahmekopf 7 in der Aufnahmeöffnung 8 formschlüssig angeordnet. Es weist zusätzlich Haltenasen 20 auf, die in eine Klemmöffnung 21 eingreifen, sodass eine form- und kraftschlüssige Fixierung der Distanzstücke 4 zusätzlich in der Aufnahmeöffnung 8 erfolgt. Ein Herausfallen der Distanzstücke 4 wird hierdurch verhindert.

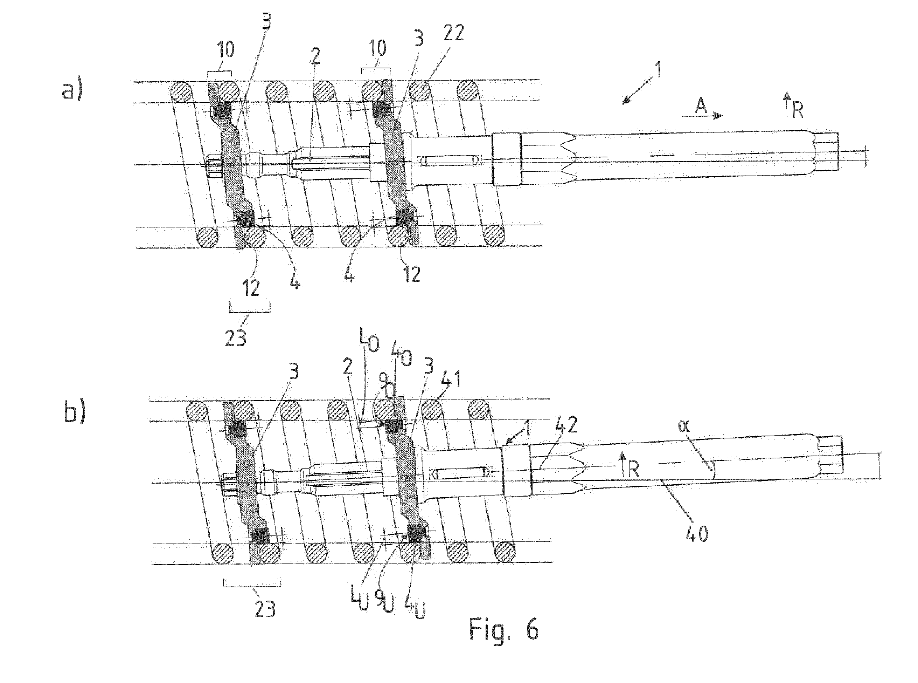

Figur 6a und b zeigen den erfindungsgemäßen Innenfederspanner 1 im Eingriff in einer Schraubendruckfeder 22. Der obere und untere Spannteller 3 greift jeweils in ein Federsegment 10 im Bereich des Federendes 23 ein und die Aufnahmefläche 12 ermöglicht ein axiales Stauchen der Feder durch Aufbringung einer Stauchkraft über das Spannmittel 2. Zur formschlüssigen radialen Fixierung sind die Distanzstücke 4 in den Spanntellern 3 angeordnet und stützen das im Bereich des jeweils eingegriffenen Federsegmentes 10 radial nach außen ab.

Die Ausführungsvariante gemäß Figur 6b zeigt ein bewusstes Verschwenken von Spannteller 3, Spannmittel 2 und Schraubendruckfeder 22, welches über die Distanzstücke zwischen Spannteller 3 und Schraubendruckfeder 22 möglich ist. Auch solche Arbeitssituationen sind durch die erfindungsgemäßen Distanzstücke 4 gut handhabbar.

Der auf die Bildebene von Figur 6b bezogene rechte Spannteller 3 ist dabei in Radialrichtung R nach oben durch entsprechende Wahl der Distanzstücke 4 versetzt. Das auf die Bildebene bezogene obere Distanzstück 4 weist nur eine kurze Länge L_{O} des Distanzfußes 9_{O} auf, in Relation zu dem auf die Bildebene bezogenen unteren Distanzstück 4_{U}, welches eine größere Länge L_{U} des Distanzfußes 9_{U} aufweist. Hierdurch erfolgt ein Versatz zwischen der Mittellängsachse 40 der Schraubendruckfeder 41 zu der Mittellängsachse 42 des Innenfederspanners 1. Dies erfolgt in einem in Figur 6b dargestellten Winkel α. Der Versatz kann jedoch auch nur an dem auf die Bildebene bezogenen linken Spannteller 3 erfolgen. Ebenfalls ist es im Rahmen der Erfindung möglich, den Versatz an beiden Spanntellern 3 einzustellen, so dass die Mittellängsachse 40 der Schraubenfeder 41 und die Mittellängsachse 42 des Innenfederspanners 1 parallel versetzt sind.

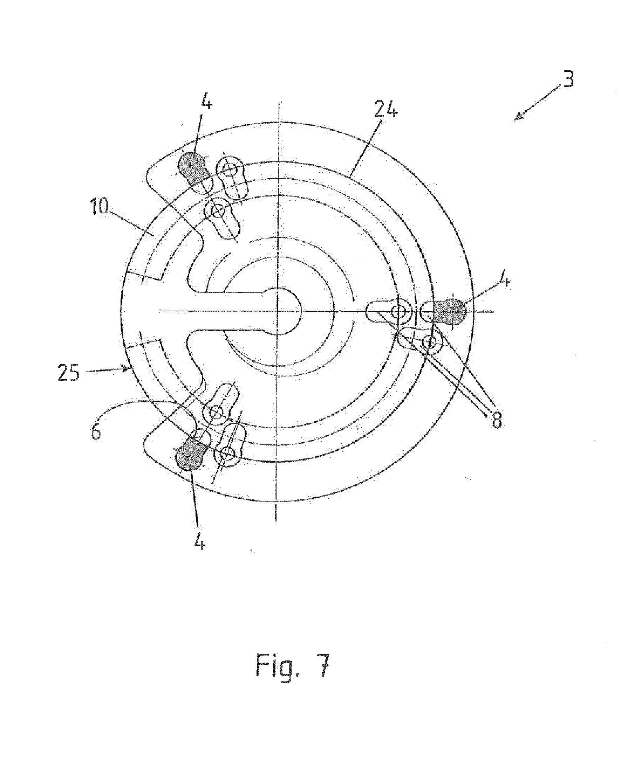

Figur 7 zeigt eine weitere Ausführungsvariante eines erfindungsgemäßen Spanntellers 3, wobei das aufgenommene Federsegment 10 durch Distanzstücke 4 radial von außen abgestützt wird, und die Distanzstücke 4 einen Außenaufnahmedurchmesser 24 bilden. Die Stirnseiten 16 der Distanzstücke 4 liegen dabei an einem Außendurchmesser 25 des Federsegmentes 10 an. Die Stirnseiten 6 selber können wiederum der Krümmung des Außendurchmessers 25 des Federsegmentes 10 angepasst sein. Auf dem erfindungsgemäßen Spannteller 3 gemäß Figur 7 befinden sich weiterhin verschiedene Aufnahmeöffnungen 8, in die die Distanzstücke 4 einsteckbar sind, sodass durch die Wahl der jeweiligen Aufnahmeöffnung 8 verschiedene Außenaufnahmedurchmesser 24 herstellbar sind. Bei der in Figur 7 dargestellten Variante sind die Distanzstücke 4 in die hier dargestellte größtmögliche Position zur Herstellung eines Außenaufnahmedurchmessers 24 angeordnet.

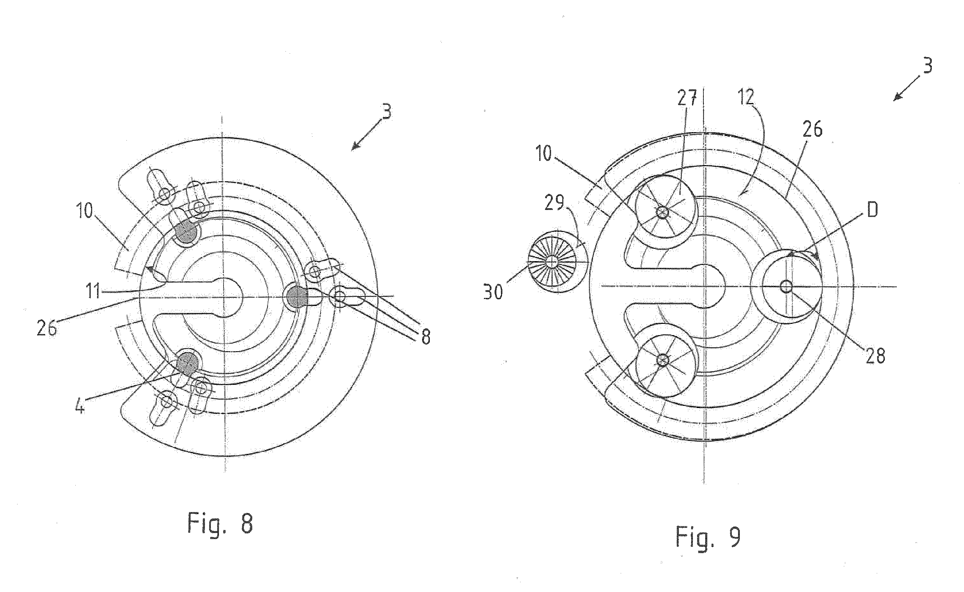

Figur 8 zeigt eine analoge Ausführungsvariante zu Figur 7, wobei hier jedoch die Distanzstücke 4 radial nach außen zeigend orientiert angeordnet sind, sodass hier ein Innenaufnahmedurchmesser 26 zur Aufnahme des Innendurchmessers 11 des Federsegmentes 10 hergestellt ist. Ebenfalls sind wiederum verschieden positionierte Aufnahmeöffnungen 8 auf dem Spannteller 3 platziert, wobei durch Einstecken entsprechender Distanzstücke 4 in die verschiedenen Aufnahmeöffnungen 8 verschiedene Innenaufnahmedurchmesser 26 herstellbar sind.

Figur 9 zeigt eine weitere Ausführungsvariante eines erfindungsgemäßen Spanntellers 3, wobei hier die Distanzstücke 4 in Form von stirnverzahnten Exzentermuttern 27 ausgebildet sind. Die stirnverzahnte Exzentermuttern 27 selber sind exzentrisch um einen Fixierpunkt 28 drehbar, sodass durch Drehung der stirnverzahnte Exzentermuttern 27 verschiedene Innenaufnahmedurchmesser 26 auf dem erfindungsgemäßen Spannteller 3 zur Aufnahme des Federsegmentes 10 herstellbar sind. In der Detailansicht ist erkennbar, dass die stirnverzahnten Exzentermuttern 27 an ihrer Unterseite 29 eine Verzahnung 30 aufweisen, sodass diese durch formschlüssiges Fixieren auf der Aufnahmefläche 12 derart lagefixiert sind, dass ein weiteres Drehen nicht möglich ist.

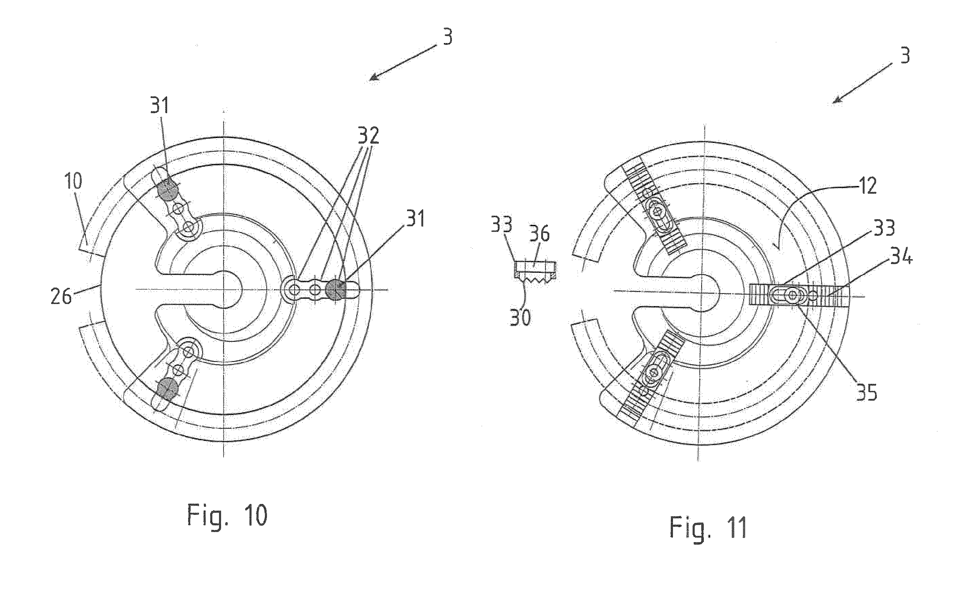

Figur 10 zeigt eine weitere Ausführungsvariante eines erfindungsgemäßen Spanntellers 3, wobei hier Steckbolzen 31 in Abstandsbohrungen 32 einsteckbar sind, sodass durch gezieltes Positionieren der Steckbolzen 31 in den Abstandsbohrungen 32 wiederum ein Innenaufnahmedurchmesser 26 mit der erfindungsgemäßen Spannplatte zur Aufnahme eines Federsegmentes 10 herstellbar ist. Die Abstandsbohrungen 32 sind auf der Spannplatte radial nach außen verlaufend benachbart beabstandet.

Figur 11 zeigt eine weitere Ausführungsvariante, bei der Langlochstücke 33 als Distanzstücke 4 nutzbar sind. Die Langlochstücke 33 weisen an einer Unterseite 29 eine Verzahnung 30 auf, wobei eine auf der Aufnahmefläche 12 korrespondierend angebrachte Gegenverzahnung 34 mit der Verzahnung 30 der Langlochstücke 33 in Eingriff bringbar ist. Zur Sicherung sind Sicherungsschrauben 35 vorgesehen, sodass variable Abstände im Zuge der formschlüssigen Verzahnung 30 beliebig einstellbar sind. Die Langlochstücke 33 weisen Langlöcher 36 auf.

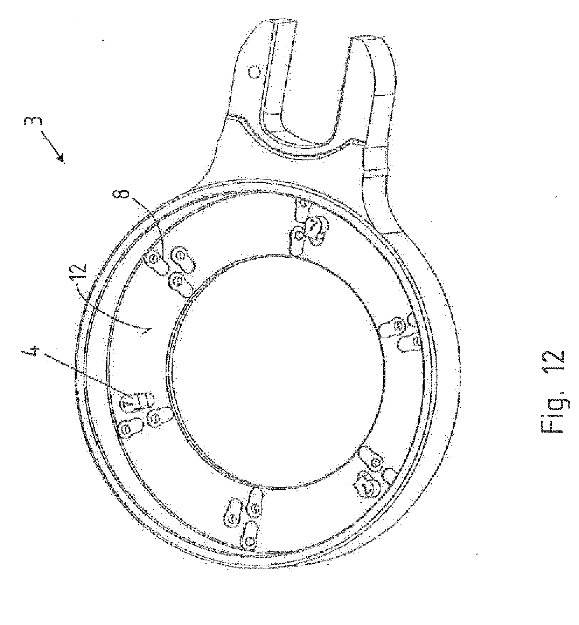

Figur 12 zeigt einen weiteren erfindungsgemäßen Spannteller 3 zum Einsatz an einen hier nicht näher dargestellten Außenfederspanner. Der Spannteller 3 weist auf seiner Aufnahmefläche 12 Aufnahmeöffnungen 8 zum Einstecken von Distanzstücken 4 auf. Der Spannteller 3 gemäß Figur 12 ist analog zu den Spanntellern 3 der Figuren 1 bis 6 an einem Außenfederspanner ausgebildet, mit dem Unterschied, dass das Federsegment 10 nicht von innen, sondern von außen von den Distanzstücken 4 umfasst wird.

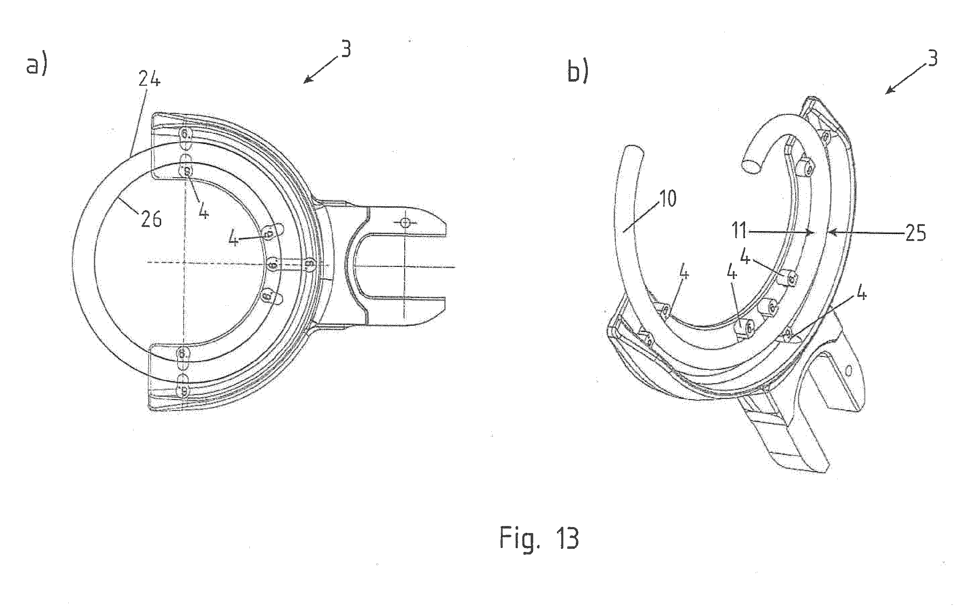

Figur 13a und b zeigen eine weitere Ausführungsvariante eines Spanntellers 3 für einen hier nicht näher dargestellten Außenfederspanner, wobei in Ergänzung zu dem Spannteller 3 gemäß Figur 12 Distanzstücke 4 zur formschlüssigen Anlage an dem in Figur 13b dargestellten Federsegment 10 am Innendurchmesser 11 und am Außendurchmesser 25 zur Anlage kommen. Folglich wird durch die Distanzstücke 4 ein Innenaufnahmedurchmesser 26 und ein Außenaufnahmedurchmesser 24 zur Aufnahme des Federsegmentes 10 festgelegt. In einer bevorzugten Ausführungsvariante gemäß Figur 13a sind im Bereich des Innenaufnahmedurchmessers 26 mehr Distanzstücke 4 angeordnet, als im Bereich des Außenaufnahmedurchmessers 24. Dies ist jedoch im Rahmen der Erfindung variabel zu gestalten und gemäß der jeweiligen zu spannenden Feder abhängig anordnenbar.

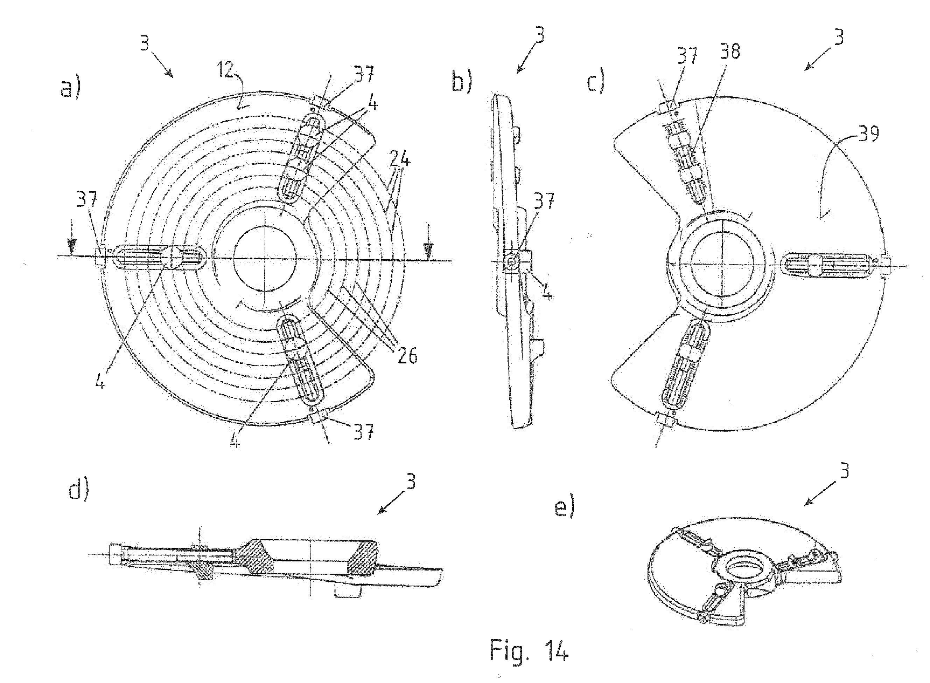

Figur 14a bis e zeigen eine weitere Ausführungsvariante eines erfindungsgemäßen Spanntellers 3. Die Distanzstücke 4 sind hierbei über eine Justierschraube 37 stufenlos verfahrbar. Hierdurch ist es möglich, variable Außen- sowie Außenaufnahmedurchmesser 24 sowie Innenaufnahmedurchmesser 26 herzustellen, die in Figur 14a exemplarisch dargestellt sind. Die auf die Bildebene in Figur 14a bezogene obere Justierschraube 37 weist dazu zwei Distanzstücke 4 auf, wohingehend die auf die Bildebene bezogene linke und untere Justierschraube 37 jeweils nur ein Distanzstück 4 aufweist. Auf diese Verteilung ist an die jeweilige Gegebenheit der zu spannenden Feder anzupassen.

Figur 14b bis e zeigen weitere Darstellungen des erfindungsgemäßen Spanntellers 3, wobei in Figur 14e weiterhin eine Skala 38 angeordnet ist, mit der eine Skala 38 auf einer Unterseite 29 des erfindungsgemäßen Spanntellers 3 angeordnet ist, mit der eine Feinjustage möglich ist.

### Bezugszeichen:

- 1 -: Innenfederspanner
- 2 -: Spannmittel
- 3 -: Spannteller
- 4 -: Distanzstück
- 4_{O} -: Distanzstück
- 4_{U} -: Distanzstück
- 5 -: Aufnahmedurchmesser
- 6 -: Stirnseite
- 7 -: Aufnahmekopf
- 8 -: Aufnahmeöffnung
- 9 -: Distanzfuß
- 9_{O} -: Distanzfuß
- 9_{U} -: Distanzfuß
- 10 -: Federsegment
- 11 -: Innendurchmesser
- 12 -: Aufnahmefläche
- 13 -: exzentrischer Versatz
- 14 -: Mittelpunkt zu 11
- 15 -: Mittelängsachse zu 3
- 16 -: Stirnseite
- 17 -: Innenfläche
- 18 -: Krümmung zu 16
- 19 -: Innenkrümmung zu 10
- 20 -: Haltenase
- 21 -: Klemmöffnung
- 22 -: Schraubendruckfeder
- 23 -: Federende
- 24 -: Außenaufnahmedurchmesser
- 25 -: Außendurchmesser zu 10
- 26 -: Innenaufnahmedurchmesser
- 27 -: stirnverzahnte Exzentermutter
- 28 -: Fixierpunkt
- 29 -: Unterseite zu 27
- 30 -: Verzahnung
- 31 -: Steckbolzen
- 32 -: Abstandsbohrung
- 33 -: Langlochstück
- 34 -: Gegenverzahnung
- 35 -: Sicherungsschraube
- 36 -: Langloch
- 37 -: Justierschraube
- 38 -: Skala
- 39 -: Unterseite zu 3
- 40 -: Mittellängsachse zu 41
- 41 -: Schraubendruckfeder
- 42 -: Mittellängsachse zu 1

- A -: Axialrichtung
- R -: Radialrichtung
- L -: Länge
- L_{U} -: Länge
- D -: Drehbewegung
- α -: Winkel

## Patentansprüche

1. Spannteller (3) für einen Federspanner zur Montage und/oder Demontage einer Fahrwerksfeder eines Kraftfahrzeuges, wobei der Spannteller (3) eine Kontaktfläche zur Aufnahme eines Federsegmentes (10) aufweist, über die eine Stauchkraft in axialer Richtung auf die Fahrwerksfeder aufbringbar ist, **dadurch gekennzeichnet, dass** ein Aufnahmedurchmesser (5) zur formschlüssigen Aufnahme des Federsegmentes (10) auf dem Spannteller (3) variabel über Distanzstücke (4) einstellbar ist.

2. Spannteller nach Anspruch 1, **dadurch gekennzeichnet, dass** die Distanzstücke (4) relativ auf dem Spannteller (3) verschiebbar sind, vorzugsweise durch eine Drehbewegung (D) und/oder eine Längsbewegung.

3. Spannteller nach Anspruch 1 oder 2, **dadurch gekennzeichnet, dass** die Distanzstücke (4) austauschbar auf dem Spannteller (3) anordnenbar sind.

4. Spannteller nach einem der Ansprüche 1 bis 3, **dadurch gekennzeichnet, dass** die Distanzstücke (4) das Federsegment (10) in radialer Richtung (R) der Spannteller (3) mit einem Innenaufnahmedurchmesser (26) formschlüssig lagefixieren.

5. Spannteller nach einem der Ansprüche 1 bis 3, **dadurch gekennzeichnet, dass** die Distanzstücke (4) das Federsegment (10) in radialer Richtung (R) der Spannteller (3) mit einem Außenaufnahmedurchmesser (24) formschlüssig lagefixieren.

6. Spannteller nach einem der Ansprüche 1 bis 5, **dadurch gekennzeichnet, dass** der Spannteller (3) in einem Innenfederspanner und/oder einem Außenfederspanner einsetzbar ist.

7. Spannteller nach einem der Ansprüche 1 bis 6, **dadurch gekennzeichnet, dass** durch die Distanzstücke (4) zwischen dem Aufnahmedurchmesser (5) und dem Federsegment (10) eine Spielpassung oder eine Übergangspassung herstellbar ist.

8. Spannteller nach einem der Ansprüche 1 bis 7, **dadurch gekennzeichnet, dass** die Distanzstücke (4) in verschiedenen Aufnahmeöffnungen (8) auf dem Spannteller (3) angeordnet sind, wobei die Aufnahmeöffnungen (8) derart positioniert sind, dass sich verschiedene Aufnahmedurchmesser (5) ergeben.

9. Spannteller nach einem der Ansprüche 1 bis 8, **dadurch gekennzeichnet, dass** durch Anordnung von Distanzstücken (4) mit voneinander verschiedenen Längen (L) der Aufnahmedurchmesser (5) veränderbar ist.

10. Spannteller nach einem der Ansorüche 1 bis 9, **dadurch gekennzeichnet, dass** die Distanzstücke (4) einen Aufnahmekopf (7) und einen Distanzfuß (9) aufweisen, wobei der Aufnahmekopf (7) in einer Aufnahmeöffnung (8) des Spanntellers (3) anordnenbar ist.

11. Spannteller nach einem der Ansprüche 1 bis 10, **dadurch gekennzeichnet, dass** die Distanzstücke (4) einen einheitlichen Aufnahmekopf (7) aufweisen, wobei der Aufnahmekopf (7) vorzugsweise ein kreisabschnittsförmige Kontur aufweist und die Distanzstücke (4) in der Aufnahmeöffnung (8) formschlüssig anordnenbar sind.

12. Spannteller nach einem der Ansprüche 10 oder 11, **dadurch gekennzeichnet, dass** der Distanzfuß (9) eines in der Aufnahmeöffnung (8) angeordneten Distanzstücke (4) radial nach außen und/oder nach innen zeigend orientiert ist, wobei durch Austausch der Distanzstücke (4) mit voneinander verschieden langen Distanzfüßen (9) der Aufnahmedurchmesser (5) veränderbar ist.

13. Spannteller nach einem der Ansprüche 10 bis 12, **dadurch gekennzeichnet, dass** die Distanzfüße (9) eine Stirnseite (16) zur Lagefixierung des Innendurchmessers (11) des Federendes (23) aufweisen, wobei die Stirnseite (16) zumindest abschnittsweise an dem Innendurchmesser (11) und/oder des Außendurchmessers (25) des Federendes (23) zur Anlage kommend ausgebildet ist, vorzugsweise weist die Stirnseite (6) eine Krümmung (18) auf, die der Krümmung (18) des Federsegmentes (10) entspricht.

14. Spannteller nach einem der Ansprüche 1 bis 13, **dadurch gekennzeichnet, dass** durch die Distanzstücke (4) Mittelpunkt des Federsegmentes (10) exzentrisch versetzt zu einer Mittellängsachse (15) des Spanntellers (3) aufnehmbar ist.

15. Spannteller nach einem der Ansprüche 1 bis 14, **dadurch gekennzeichnet, dass** die Distanzstücke (4) aus einem Kunststoff bestehen.

16. Spannteller nach einem der Ansprüche 1 bis 15, **dadurch gekennzeichnet, dass** Stirnseiten (6) des Distanzstückes (4) eine Beschichtung aufweisen, vorzugsweise eine Kunststoffbeschichtung oder eine Gummibeschichtung.

17. Spannteller nach einem der Ansprüche 1 bis 16, **dadurch gekennzeichnet, dass** die Distanzstücke (4) mit einer Kennzeichnung versehen sind, so dass die unterschiedlichen Längen der Distanzfüße (9) erkennbar sind, vorzugsweise erfolgt die Kennzeichnung durch Zeichen und/oder durch Farbe.

18. Spannteller nach einem der Ansprüche 1 bis 17, **dadurch gekennzeichnet, dass** die Distanzstücke (4) als stirnverzahnte Exzentermuttern (27) ausgebildet sind, wobei die Stirnverzahnte Exzentermutter (27) exzentrisch um einen Fixierpunkt (28) auf dem Spannteller (3) drehbar ist.

19. Spannteller nach einem der Ansprüche 1 bis 18, **dadurch gekennzeichnet, dass** die Distanzstücke (4) als Steckbolzen (31) ausgebildet sind, wobei auf dem Spannteller (3) bstandsbohrungen (32) nebeneinander radial nach außen verlaufend angeordnet sind und die Steckbolzen (31) in die Abstandsbohrungen (32) variabel zur Festlegung eines Aufnahmedurchmessers (5) anordnenbar sind.

20. Federspanner zur Montage und/oder Demontage einer Schraubendruckfeder (22) in einem Kraftfahrzeug mit einem Spannteller (3) gemäß wenigstens einem der vorstehenden Ansprüche.
